# EUROPÄISCHE PATENTANMELDUNG

(11) **EP 0 980 722 A2**
(43) Veröffentlichungstag der Anmeldung: **23.02.2000**
(21) Anmeldenummer: 99112893.5
(22) Anmeldetag: 03.07.1999
(51) Int. Cl.: B09C 1/00, E02D 19/18

(54) **Verfahren zur Herstellung einer permeablen, reaktiven Wand mit hydraulisch dichten Anschlüssen**

(30) Priorität: 20.08.1998 DE 19837726
(71) Anmelder: Thyssen Krupp Stahl AG, 40211 Düsseldorf (DE)
(72) Erfinder: Schlottmann, Christian, 44139 Dortmund (DE); Wieners, Andreas, Dipl.-Ing., 45768 Marl (DE)

(57) **Zusammenfassung**

Um ein Verfahren zur Herstellung einer permeablen, reaktiven Wand zu schaffen, bei der Durchlässe aus Fertigteilen (1) hergestellt werden, die eine statisch belastbare Außenschale besitzen und gleichzeitig als Stützung des reaktiven Materials dienen, eine hydraulisch dichte, kontrollierbare, vertikal verschiebbare Anbindung an die Trichter-Segmente (3a) sowie an weitere Filterstränge sicherstellen, eine ausreichende Durchlässigkeit im Filterstrang gewährleisten, entsteht durch die Verbindung der Außenkanten eines Einbauelementes mit Zwischenelementen (3a) ein Fertigteilelement mit in sich geschlossenem Querschnitt mit definierter allseitiger/halbseitiger Perforation bei horizontaler oder vertikaler Durchströmung des reaktiven Materials, wobei durch die Verbindung der einzelnen Elemente ein in sich geschlossenes Wandsystem entsteht.

## Beschreibung

Die heute am häufigsten praktizierten Maßnahmen im Fall von Grundwasserverunreinigungen sind das komplette Einkapseln des Schadensherdes oder das Abpumpen des kontaminierten Wassers mit anschließender Abwasserreinigung.

Seit neuester Zeit werden alternativ zu diesen Verfahren sogenannte reaktive Wände hergestellt. Diese Wände zeichnen sich dadurch aus, daß ihre hydraulische Durchlässigkeit etwas größer ist als die des umgebenden Aquifers und die eigentliche Wand hauptsächlich aus reaktiven Materialien wie z.B. nullwertiges Eisen oder Aktivkohle besteht.

Reaktive Wände können als vollflächig durchströmte Wände oder als 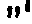 Funnel-and-Gate" System hergestellt werden.

Vollflächig durchströmte reaktive Wände sind dadurch gekennzeichnet, daß im gesamten Bereich des zu sanierenden Grundwasserabstroms eine In-situ-Reaktionszeit in den zu sanierenden Aquifer eingebracht wird.

Funnel-and-Gate Systeme sind dadurch gekennzeichnet, daß das durchlässige reaktive Material auf einige Teilbereiche (Gate = Durchlaß) des kontaminierten Aquifers beschränkt wird und der zu reinigende Grundwasserabstrom durch eine hydraulische Sperre (Funnel = Trichter) passiv dem reaktiven Durchlaßbereich zugeführt wird.

Die Ausbildung der Trichter können durch die verschiedenen Dichtwandverfahren des Spezialtiefbaus, z.B. Schmal-, Schlitz- oder Spundwände sowie mit Bohrpfahlwänden hergestellt werden, wie z.B. beschrieben in: Geotechnik Heft 2/1998, Reaktive Wände - Aktueller Stand der Praxisanwendung, Seiten 75-82.

Durchlässe werden entweder in separaten Baugruben als Betonbauwerke hergestellt oder durch überschnittene Bohrungen mit anschließendem Austausch des Bodens durch das reaktive Material hergestellt. In diesem Fall bildet das reaktive Material selbst die Wand.

Von besonderer Bedeutung sind bei der Herstellung eines 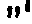 Funnel-and-Gate" Systems die Schaffung einer hydraulisch dichten Anbindung der Trichter-Segmente an die Durchlässe, sowie die Sicherstellung einer ausreichenden Durchlässigkeit der Durchlässe einschließlich der reaktiven Füllung und eine kostengünstige Austauschbarkeit des reaktiven Materials.

Eine Möglichkeit zur Herstellung solcher Systeme beschreibt die DE 197 15 038 A1.

Nachteilig in DE 197 15 038 A1 ist bei der Ausbildung der Abdichtbereiche zwischen den Durchlässen/Gates, daß
a) beim Ziehen der Verrohrung in den mit quellfähigem Ton errichteten Abdichtbereichen eine Fuge entsteht, die nur beim Quellen des Ton's unkontrollierbar annähernd geschlossen wird
b) die Funktionstüchtigkeit der Abdichtbereiche nicht kontrollierbar ist
c) die Abdichtbereiche nicht kraftschlüssig miteinander verbunden sind und somit keine Bewegungen/Verformungen schadensfrei aufnehmen können
d) die Abdichtbereiche beim Ziehen der Filterstränge zerstört werden
e) die Abdichtbereiche nur durch erhöhten Aufwand repariert werden können
f) die erforderliche Überlappung der einzelnen Abdichtbereiche über die gesamte Tiefe nicht gewährleistet/kontrolliert werden kann
g) auch zwischen den Begrenzungen der Filterstränge und dem Quellton durch unterschiedliches Materialverhalten (z.B. Schrumpfen) Fugen auftreten.

Der Erfindung liegt die Aufgabe zugrunde, aus Fertigteilen Durchlässe herzustellen, die
- eine statisch belastbare Außenschale besitzen und gleichzeitig als Stützung des reaktiven Materials dienen,
- eine hydraulisch dichte, form- und kraftschlüssige Anbindung der Abdichtungsbereiche an die Trichter-Segmente sicherzustellen,
- eine kostengünstige Austauschbarkeit des reaktiven Materials sicherstellen, ohne die Abdichtungsbereiche zu zerstören.

Nach der Erfindung wird die Aufgabe durch die im Anspruch 1 angegebenen Merkmale gelöst.

Vorteilhafte und zweckmäßige Weiterbildungen der Erfindung sind in den Ansprüchen 2 bis 5 angegeben.

Die vorgefertigten Durchlässe werden durch Rammen, Vibrieren, Pressen oder Stellen in den Boden eingebaut. Die Fertigteilelemente können werkseitig oder vor Ort hergestellt werden.

Nachfolgend wird die Erfindung anhand von in der Zeichnung schematisch dargestellten Ausführungsbeispielen näher erläutert.

### Es zeigt

- Fig. 1: Filterstrang als Fertigteilelemente aus einer stählernen Hülle/Schale 1 in runder 1a, ovaler 1b oder eckiger 1c Form, wobei die Hülle/Schale 1 des Filterstranges allseitig über ihre ganze Länge oder in Teilbereichen perforiert ist.
- Fig. 2: Die Perforation 2a ist durch ausgewölbte, dachförmige Übersätze 2b gegen das Eindringen von Bodenmaterial geschützt.
- Fig. 3: Die Hülle/Schale 1 des Filterstranges wird kraftschlüssig an ihrer Außenseite in Richtung der anzuschließenden Trichter bzw. in Richtung des nächsten Filterstrangs mit Adaptern/Anschlußelementen 3 verbunden, die einen hydraulischen dichten Anschluß an die Trichter ermöglichen.
Die Hülle/Schale 1 des Filerstranges wird vor dem Einbau in den Boden mit dem/den Adapter/n 3 kraftschlüssig und wasserdicht verbunden und gemeinsam in einem Arbeitsgang eingebaut, wobei die Verbindung der Adapter 3 mit den Zwischenelementen (Trichtern) 3a eine in horizontaler Richtung starre Führung aufweist, vertikal jedoch verschieblich ausgebildet sind.
Als Adapter/Anschlußelemente werden kompatible Schloßprofile der Trichter-Elemente benutzt (z.B. Eckprofile beim Anschluß Stahl an Stahl oder Schloßabschnitte beim Anschluß Stahl an Beton bzw. Bentonit-Zement).

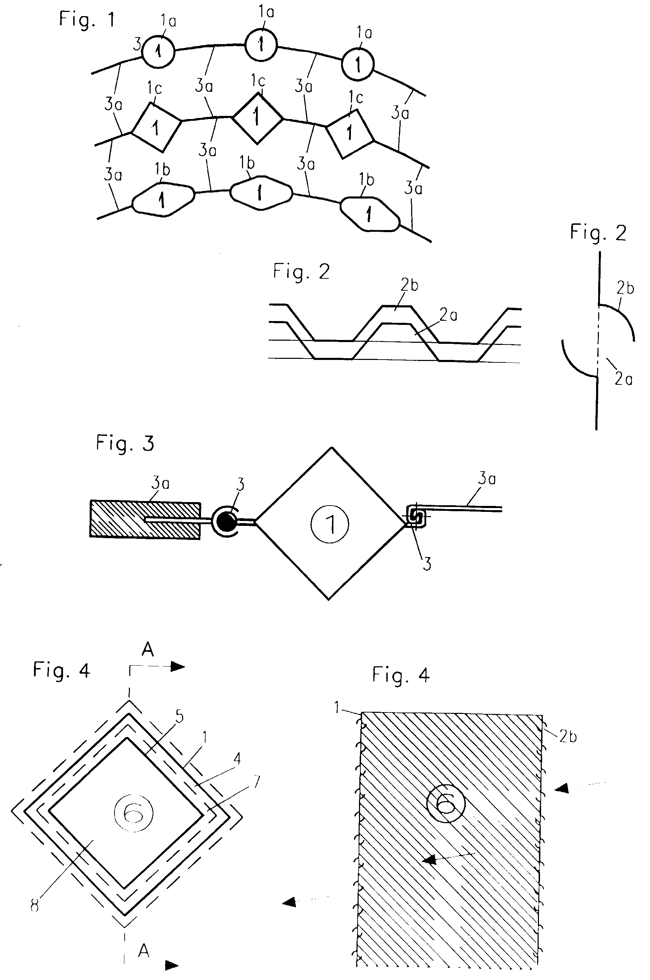

- Fig.4: Der Innenraum 4 der Hülle/Schale 1 wird nach dem Einbau in den Boden zunächst vom Boden befreit. Dieser so entstandene Hohlraum wird mit einem unten geschlossenen maschenartigen Körner 5 versehen. In diesen Körner wird das reaktive Material 6 gefüllt und ggf. mit einer außenliegenden Drainage 7 versehen. Der so aufgebaute reaktive Filter 8 wird sukzessive im Innenraum der Hülle/Schale 1 erstellt oder vorab komplett gefertigt und in die Hülle/Schale 1 eingestellt.

## Patentansprüche

1. Verfahren zur Herstellung einer permeablen, reaktiven Filterwand durch die Verbindung von Anschlußelementen/Adaptern eines Filterstranges mit Zwischenelementen bzw. weiteren Filtersträngen, dadurch gekennzeichnet, daß die Filterstränge jeweils aus einem Fertigteilelement mit in sich geschlossenem Querschnitt mit definierter allseitiger/halbseitiger Perforation gebildet werden, die mit reaktivem Material gefüllt und über an ihren Außenkanten angeordnete Anschlußelemente relativ in Längsrichtung zu den Zwischenelementen verschiebbar mit diesen verbunden werden, wobei durch die Verbindung der einzelnen Elemente ein in sich geschlossenes Wandsystem entsteht.

2. Verfahren zur Herstellung der wasserdichten Anschlußelemente eines bzw. mehrerer Filterstränge, dadurch gekennzeichnet, daß nach Herstellung seiner endgültigen Form eine Verschiebbarkeit in den Abdichtungsbereichen während und nach dem Einbau erhalten bleibt, so daß das entstandene System durch Herausziehen der Zwischenelemente und den Einbau weiterer Filsterstränge an Stellen der Zwischenelemente jederzeit erweitert werden kann.

3. Verfahren nach Anspruch 1 oder 2, dadurch gekennzeichnet, daß der Filterstrang aus dem Wandsystem entfernt werden kann, ohne die Standsicherheit des Systems zu gefährden, und ohne die Abdichtungsbereiche/Anschlußelemente zu beschädigen.

4. Verfahren nach einem oder mehreren der Ansprüche 1 bis 3, dadurch gekennzeichnet, daß durch den Einbau eines elektrischen Meßgebers in Adapter/Anschlußelemente und durch die gegenseitige starre Führung zwischen den Zwischenelementen und/oder den Filtersträngen die Dichtigkeit der Anschlußelemente über die ganze Tiefe kontrollierbar ist.

5. Verfahren nach einem oder mehreren Ansprüchen 1 bis 4, dadurch gekennzeichnet, daß durch die Verwendung gleicher Materialien der Hülle/Schale des Filterstranges und den Anschlußelementen/Adaptern keine materialbedingten Fugen entstehen.

6. Verfahren nach einem oder mehreren Ansprüchen 1 bis 5, dadurch gekennzeichnet, daß zwischen den einzelnen Filtersträngen jeweils durch Anschlußelemente verbundene Zwischenelemente sich in der Reihenfolge ihres Einbaus abwechseln, so daß jeweils kleine Trichter/Durchlässe entstehen.
